# EUROPÄISCHE PATENTSCHRIFT

(11) **EP 2 539 403 B1**
(45) Veröffentlichungstag und Bekanntmachung des Hinweises auf die Patenterteilung: **06.08.2014**
(21) Anmeldenummer: 11705865.1
(22) Anmeldetag: 22.02.2011
(51) Int. Cl.: C09B 1/16, C09B 1/50, C09B 5/14, G07D 7/12

(54) **VERFAHREN ZUR VERIFIKATION VON SICHERHEITS- UND WERTDOKUMENTEN MIT EINEM ANTHRACHINON-FARBSTOFF**
METHOD OF AUTHENTICATING OF A SECURITY OR VALUE DOCUMENT USING AN ANTHRAQUINONE DYE
PROCEDE POUR VERIFICATION DE DOCUMENTS DE SECURITE OU DE VALEUR PAR UN COLORANT D'ANTHRAQUINONE

(30) Priorität: 25.02.2010 DE 102010000559
(43) Veröffentlichungstag der Anmeldung: 02.01.2013
(73) Patentinhaber: Bundesdruckerei GmbH, 10969 Berlin (DE)
(72) Erfinder: MUTH, Oliver, 12277 Berlin (DE); MOMBRÉE, Alexander, 10829 Berlin (DE); KNEBEL, Michael, 10405 Berlin (DE)
(74) Vertreter: Bressel, Burkhard
(86) Internationale Anmeldenummer: PCT/EP2011/052615
(87) Internationale Veröffentlichungsnummer: WO 2011/104240

(56) Entgegenhaltungen:
- EP-A1- 0 256 168
- WO-A1-2004/048118
- US-A1- 2006 033 325
- M.V.KAZANKOV ET AL.: "Reaction of Anthrapyridones with Nucleophilic Reagents", CHEMISTRY OF HETEROCYCLIC COMPOUNDS, Bd. 8, 1972, Seiten 339-343, XP002635256,

## Beschreibung

Gegenstand der Erfindung ist ein Verfahren zum Verifizieren eines Sicherheits- oder Wertdokuments über mindestens ein Sicherheitsmerkmal, welches durch jeweils mindestens einen im NIR-Spektralbereich lumineszierenden Markierungsstoff gebildet ist, für die Verifikation von Sicherheits- oder Wertdokumenten, insbesondere von Personaldokumenten wie Pässen, Personalausweisen, Führerscheinen, Visa, Betriebs- und Dienstausweisen und dergleichen.

### Stand der Technik

Zur Absicherung von Sicherheits- oder Wertdokumenten ist die Prüfung nicht visuell wahrnehmbarer Merkmale von zunehmender Bedeutung. Zum einen dienen diese einer maschinellen und somit oftmals schnellen und sicheren Verifikation. Zum anderen ist das Vorhandensein von Sicherheitsmerkmalen außerhalb der menschlichen Wahrnehmung für einen potentiellen Fälscher schwer zu erkennen.

Weiter hat sich gezeigt, dass die Nutzung verschiedener Eigenschaften zur Überprüfung der Echtheit eines Sicherheits- oder Wertdokuments deren Fälschung oder Verfälschung deutlich erschweren.

Als besonders praktisch hat es sich erwiesen, Lumineszenzen im nahen infraroten Spektralbereich des Lichtes (NIR) zu verwenden, da Detektoren auf Siliziumbasis einfach und kostengünstig eingesetzt werden können. Diese haben jedoch nur bis etwa 1100 nm eine ausreichende Empfindlichkeit. InGaAs-Detektoren können bis etwa 1600 nm effizient eingesetzt werden. Eine Detektion bei höheren Wellenlängen ist verhältnismäßig aufwändig, insbesondere werden oftmals gekühlte Detektoren benötigt.

Aus DE 603 13 034 T2 ist ein Verfahren zur Markierung optischer Gegenstände, zum Beispiel CDs und DVDs, bekannt. Hierbei werden spektroskopische Markierungen auf bestimmte Stellen auf die Oberfläche aufgebracht. Die Aufbringung erfolgt hierbei mittels lokaler Modifizierung der Oberflächenenergie und anschließendes Spincoating. Zur spektroskopischen Markierung können Farbstoffe und Pigmente, zum Beispiel Fluoreszenzfarbstoffe, eingesetzt werden.

Aus DE 10 2007 052 947 A1 ist eine Tintenstrahldruckfarbe bekannt. Diese weist als eine Komponente ein Farbmittel oder ein Farbmittelgemisch auf, wobei unter Farbmittel alle farbgebenden Stoffe verstanden werden. Als mögliche farbgebende Stoffe werden Anthrachinon-Farbstoffe genannt. Ferner weist die Tintenstrahldruckfarbe eine weitere Komponente auf, welche unter Einsatz von technischen Hilfsmitteln ersichtlich sind, zum Beispiel Lumineszenzstoffe.

### Problem nach dem Stand der Technik und Aufgabe der Erfindung

Nachteilig an den genannten Systemen ist, dass die Einbringung von im NIR lumineszierenden Stoffen für einen Fälscher potentiell erkennbar ist, da diese entweder gesondert oder zusätzlich zu den farbgebenden Farbstoffen eingesetzt werden. Dadurch lassen sich diese chemisch identifizieren und lässt sich deren Funktion anhand ihrer physikalischen Eigenschaften erraten.

Die Aufgabe der vorliegenden Erfindung ist es nun, ein Verfahren zum Verifizieren eines Sicherheits- oder Wertdokuments bereit zu stellen, bei welchem ein potentieller Fälscher die Maschinenlesbarkeit des Merkmals nicht unmittelbar erkennen kann.

### Definitionen gemäß der vorliegenden Erfindung

Unter Alkyl werden gesättigte Kohlenwasserstoffgruppen verstanden. Unter Cₙ-Alkyl wird eine gesättigte Kohlenwasserstoffgruppe mit n Kohlenstoffatomen verstanden, C₁-Cₘ-Alkyl umfasst alle gesättigten Kohlenwasserstoffgruppen mit 1 bis m Kohlenstoffatomen. n und m sind ganze Zahlen. C₁-Alkyl ist Methyl, C₂-Alkyl ist Ethyl, C₃-Alkyl umfasst n-Propyl und Methylethyl (i-Propyl), C₄-Alkyl umfasst n-Butyl, 1-Methylpropyl, 2-Methylpropyl (i-Butyl) und 1,1-Dimethylethyl (t-Butyl). C₅-Alkyl umfasst n-Pentyl, 1-Methylbutyl, 2-Methylbutyl, 3-Methylbutyl, 1,1-Dimethylpropyl, 1,2-Dimethylpropyl, 2,2-Dimethylpropyl, 1-Ethylpropyl und die Isomeren von Cyclopentyl. C₆-Alkyl umfasst n-Hexyl sowie dessen Isomere, ferner Cyclohexyl und die Isomeren von Methylcyclopentyl. C₇-Alkyl umfasst n-Heptyl sowie dessen Isomere, ferner die Isomeren von Methylcyclohexyl, Dimethylcyclopentyl und Ethylcyclopentyl. C₈-Alkyl umfasst n-Octyl sowie dessen Isomere, ferner die Isomeren von Dimethylcyclohexyl, Ethylcyclohexyl, Trimethylcyclopentyl, Methylethylcycopentyl und Propylcyclopentyl. Die höheren Homologen umfassen in entsprechender Weise die entsprechenden Isomeren.

Unter Aryl werden cyclische aromatische Kohlenwasserstoffgruppen verstanden. Unter Cₙ-Aryl wird eine cyclische aromatische Kohlenwasserstoffgruppe mit n Kohlenstoffatomen im aromatischen Ringsystem verstanden, C₁-Cₘ-Aryl umfasst alle cyclischen aromatischen Kohlenwasserstoffgruppen mit 1 bis m Kohlenstoffatomen im aromatischen Ringsystem. n und m sind ganze Zahlen. C₆-Aryl ist Phenyl, C₁₀-Aryl umfasst Naphthyl. Aryl kann substituiert und unsubstituiert sein. Sofern Aryl substituiert ist, kann jeder Arylring mit einem oder mehreren C₁-C₁₅-Alkyl, C₅-C₁₂-Aryl, OR, NRR', COR, COOR, CONRR', SO₂R, SO₂NRR', SO₂OR, NO₂, CN substituiert sein, wobei die Substituenten am Arylring unabhängig voneinander gewählt sein können und wobei R und R' unabhängig voneinander H, C₁-C₈-Alkyl und C₅-C₁₂-Aryl sein können.

### Beschreibung der Erfindung und bevorzugte Ausführungsformen

Die Aufgabe wird durch das Verfahren gemäß Anspruch 1 gelöst.

Das erfindungsgemäße Verfahren zum Verifizieren eines Sicherheits- oder Wertdokuments über mindestens ein Sicherheitsmerkmal umfasst die Verfahrensschritte (a) Bereitstellen des Sicherheits- oder Wertdokuments, (b) Anregen und (c) Registrieren einer Lumineszenz. Das Sicherheits- oder Wertdokument weist mindestens ein Sicherheitsmerkmal auf, welches durch jeweils mindestens einen im NIR-Spektralbereich lumineszierenden Markierungsstoff gebildet wird. Erfindungsgemäß wird unter NIR der Bereich zwischen 650 nm und 1600 nm verstanden. Die NIR-Lumineszenz liegt somit erfindungsgemäß im Bereich größer 650 nm, bevorzugt größer 700 nm. Weiter weist die NIR-Lumineszenz erfindungsgemäß wenigstens einen Anteil der Lumineszenz im Bereich von weniger als 1600 nm, bevorzugt weniger als 1400 nm, besonders bevorzugt weniger als 1100 nm auf. Die Anregung des mindestens einen Markierungsstoffes erfolgt erfindungsgemäß unterhalb von 650 nm. Der Markierungsstoff wird zur Lumineszenz angeregt, und die durch die Anregung erzeugte Lumineszenz des mindestens einen Markierungsstoffes wird im NIR-Spektralbereich detektiert. Hierbei kann das Registrieren spektral aufgelöst oder ohne spektrale Auflösung erfolgen. Beispielsweise erfolgt das Registrieren mittels einer Diode, welche mittels eines 650 nm-Langpassfilters nur Strahlung im NIR-Spektralbereich detektieren kann. Alternativ kann die Lumineszenz spektral aufgelöst, zum Beispiel mittels eines Spektralphotometers registriert werden. Erfindungswesentlich ist, dass mindestens ein Markierungsstoff aus der Klasse der Anthrachinon-Farbstoffe ausgewählt ist.

Das erfindungsgemäße Verfahren wird insbesondere zur Absicherung von eingebrachten, personalisierten Informationen oder zur weiteren Erhöhung der Sicherheit von bekannten Sicherheitsmerkmälen verwendet. Beispielsweise wird das erfindungsgemäße Verfahren zur Absicherung eines Passbildes oder von Schrift, welche beispielsweise den Inhabernamen wiedergibt, eingesetzt. So kann mindestens eine der zur Erzeugung des Passbildes verwendeten Farben einen Anthrachinon-Farbstoff enthalten. Zusätzlich kann mindestens eine zweite Farbe durch ihre Absorption im sichtbaren Spektralbereich die personalisierte Information, beispielsweise das Passbild, sichtbar machen. Ebenso kann das erfindungsgemäße Verfahren eingesetzt werden, um zum Beispiel Guillochen oder einen Hintergrunddruck mit Irisverlauf zusätzlich gegen Nachstellung abzusichern.

Anthrachinon-Farbstoffe sind bei der Einfärbung von Kunststoffteilen häufig verwendete Farbmittel. Farbmittel sind Farbstoffe, welche aufgrund ihrer Absorption einen farbigen Eindruck erzeugen. Übliche Anthrachinon-Farbstoffe weisen eine Lichtechtheit zwischen 6 und 8 auf und sind daher grundsätzlich auch für die Verwendung in langlebigen Dokumenten gut geeignet. Allerdings wird ein Fälscher, welcher die Anthrachinon-Farbstoffe identifiziert, diese jedoch nur im Hinblick auf deren Absorptionseigenschaften und die somit erzeugte Farbigkeit für relevant erachten. Selbst unter der Voraussetzung, dass der Fälscher die NIR-Lumineszenz als relevante Eigenschaft mit berücksichtigen würde, ergibt sich eine erhöhte Sicherheit gegen Fälschung und Verfälschung, da nicht nur der visuelle Eindruck sondern auch die NIR-Lumineszenz-Eigenschaften des Stoffes durch den Fälscher exakt mit einem Farbstoff nachgestellt werden müssen. Dieses ist schwieriger als die Nachstellung eines ersten Stoffes, welcher die visuellen Eigenschaften des Dokuments beeinflusst und eines zweiten, getrennt vorliegenden Stoffes, welcher über NIR-Lumineszenz-Eigenschaften verfügt.

In einer bevorzugten Ausführungsform der Erfindung ist mindestens ein Anthrachinon-Farbstoff ausgewählt aus Monoamino-, vorzugsweise 1-Monoamino-, Diamino-, vorzugsweise 1,4-Diamino-, und Amino-hydroxy-, vorzugsweise 1-Amino-4-hydroxyanthrachinon-Farbstoffen.

Ein weiterer bevorzugter Farbstoff ist durch die folgende Strukturformel gegeben:

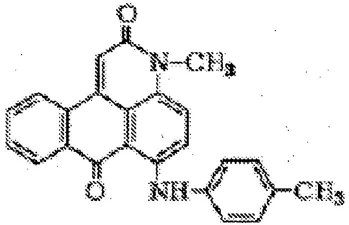

Bevorzugte Antrachinon-Farbstoffe sind ferner durch die Formel 1 gegeben:

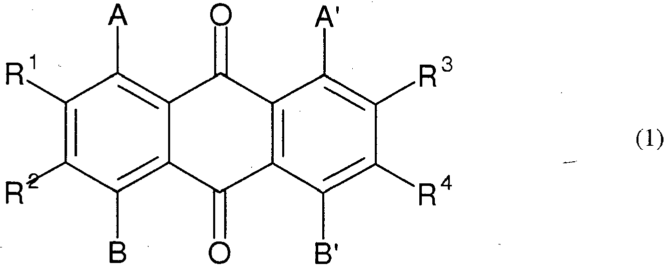

A, A', B und B' sind Reste, die unabhängig voneinander ausgewählt sind aus der Gruppe, umfassend H, OR, NRR' und NO₂.

R¹, R², R³ und R⁴ sind Reste, die unabhängig voneinander ausgewählt sind aus der Gruppe, umfassend H, OR und SR.

In den vorstehend angegebenen Resten sind R und R' unabhängig voneinander ausgewählt aus der Gruppe, umfassend H, C₁-C₁₅-Alkyl, bevorzugt C₁-C₈-Alkyl, unsubstituiertes oder substituiertes Aryl, insbesondere unsubstituiertes oder substituiertes C₅-C₁₀-Aryl, ganz besonders unsubstituiertes oder substituiertes Phenyl, (CH₂)ₙ-OR" mit n = 1 - 8, bevorzugt n = 1 - 4, und wobei R" = H, C₁-C₁₅-Alkyl, bevorzugt C₁-C₈-Alkyl, sowie (CH₂CH₂O)ₙ-R" mit n = 1 - 8, bevorzugt n = 1 - 4, und wobei R" = H, C₁-C₁₅-Alkyl, bevorzugt C₁-C₈-Alkyl.

Besonders bevorzugt sind folgende Verbindungen:
1. A und B sind NRR' mit R = H und R' = CH₂-CH(CH₃)₂ sowie A', B', R¹, R², R³ und R⁴ = H: 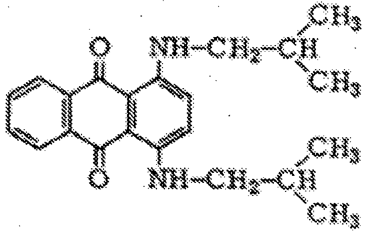
2.
   (i)
      **A** = NRR' mit R = H und R' = (CH₂)ₙ-OR", wobei n = 3 und R" = CH₂-CH(C₂H₅)((CH₂)₃CH₃), und
      **B** = NRR' mit R = H und R' = (CH₂)ₙ-OR", wobei n = 3 und R" = CH₂-CH(C₂H₅)((CH₂)₃CH₃) sowie **A', B', R¹, R², R³ und R⁴** = H oder
   (ii)
      A = NRR' mit R = H und R' = (CH₂)ₙ-OR", wobei n = 3 und R" = CH₂-CH(C₂H₅)((CH₂)₃CH₃) und
      B = NRR' mit R = H und R' = CH₂-CH(C₂H₅)((CH₂)₃CH₃) sowie **A', B', R¹, R², R³ und R⁴** = H oder
   (iii)
      **A** = NRR' mit R = H und R' = CH₂-CH(C₂H₅)((CH₂)₃CH₃) und
      **B** = NRR' mit R = H und R' = (CH₂)ₙ-OR", wobei n = 3 und R" = CH₂-CH(C₂H₅)((CH₂)₃CH₃) sowie **A', B', R¹**, **R², R³** und **R⁴** = H oder
   (iv)
      **A** = NRR' mit R = H und R' = CH₂-CH(C₂H₅)((CH₂)₃CH₃) und
      **B** = NRR' mit R = H und R' = CH₂-CH(C₂H₅)((CH₂)₃CH₃) sowie **A', B', R¹, R², R³** und **R⁴** = H: 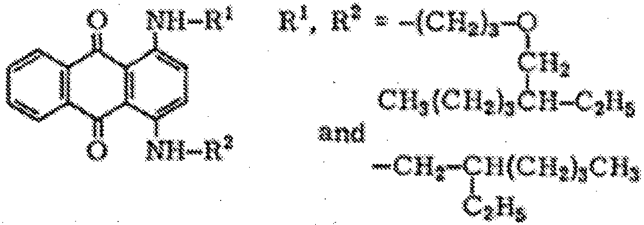
3. **A** gleich NRR' mit R = H und R' = CH₃ sowie **B, A', B', R¹**, **R², R³** und **R⁴** = H: 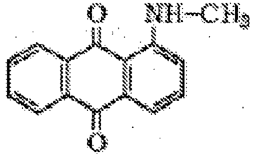
4. **A** = OR mit R = H, B = NRR' mit R = H und R' = (4-methylphenyl) sowie **A',** B', **R¹, R², R³** und **R⁴** = H: 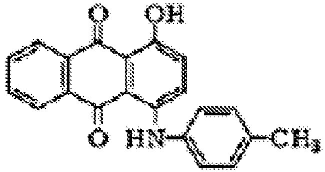
5. **A** und **B** = NRR' mit R = H und R' = phenyl sowie **A', B', R¹, R², R³** und **R⁴** gleich H: 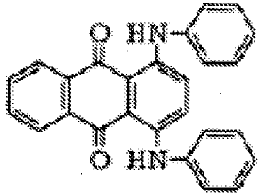
6. **A** = OR mit R = H, B = NRR' mit R = R' = H sowie **A', B', R¹, R², R³** und **R⁴** = H: 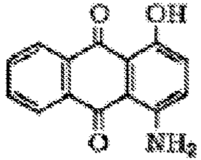
7. **A** und B gleich NRR' mit R = R' = H sowie **A', B', R¹, R², R³** und **R⁴** = H: 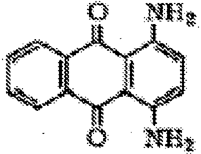
8. **A** = OR mit R = H, **B** = NRR' mit R = H und R' hat eine der oben genannten Bedeutungen sowie **A', B', R¹, R², R³** und **R⁴** = H: 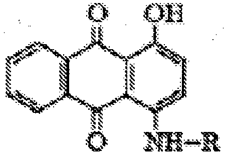
9.
   (i) **A** und **B' =** OR mit R = H, **A'** und **B =** NRR' mit R = R' = H, sowie **R¹**, **R², R³** und **R⁴** = H oder
   (ii) A und B = OR mit R = H, **A'** und **B'** = NRR' mit R = R' = H sowie **R¹, R², R³** und **R⁴** = H oder
   (iii) **A** und **A' =** OR mit R = H und B und **B'** = NRR' mit R = R' = H sowie **R¹**, **R²**, **R³** und **R⁴** = H:

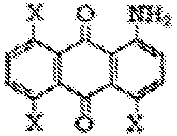

   (i) **A** = OR mit R = H, **B** = NRR' mit R = H und R' = Aryl, **A'** = NO₂,:B' = OR mit R = H oder
   (ii) **A =** OR mit R = H, **B** = NRR' mit R = H und R' = Aryl, **A'** = OR mit R = **H,:B' =** NO₂: 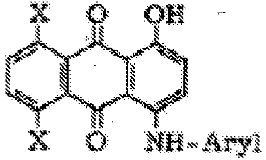 1 X = OH, 1 X - NO₂
10. **A** = NRR' mit R = R' = H, B = OR mit R = H, **R¹** = OR mit R = (CH₂)ₙ-OR" mit n = 2 und R" = H sowie **A', B', R²**, **R³** und **R⁴** = H: 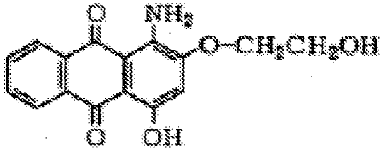
11. **A** und B = NRR' mit R = H und R'=CH₃ sowie **A'**, B', **R¹**, **R², R³** und **R⁴** = H: 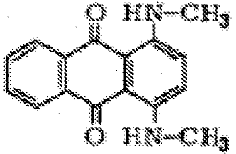
12. A = NRR' mit R = R' = H, B = NRR' mit R = H und R' = cyclohexyl, **R' =** SR mit R = (CH₂)ₙ-OR" mit n = 2 und R" = H sowie **A', B', R²**, **R³** und **R⁴** = H: 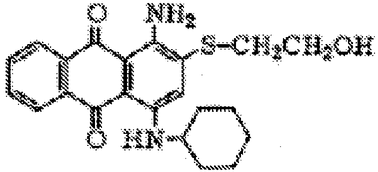
13. **A, B,** A' und **B'** = NRR' mit R = R' = H sowie **R¹ R²**, **R³** und **R⁴** jeweils unabhängig voneinander ausgewählt aus H und CH₃,
   insbesondere A, B, A' und **B'** = NRR' mit R = R' = H, **R¹** oder **R²** oder **R³** oder **R⁴** = CH₃ sowie die übrigen Reste = H: 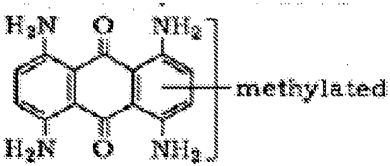
14. **A** und **B** = NRR' mit R = H und R' = (CH₂)ₙ-OR" mit n = 2 und R" = H, **A'** und **B'** = OR mit R = H sowie **R¹, R², R³** und **R⁴** = H: 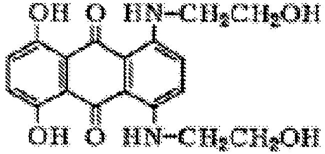
15. **A** und **B** = NRR' mit R = R' = H, **R¹** und **R²** = OR mit R = phenyl sowie **A', B', R³** und **R⁴** = H 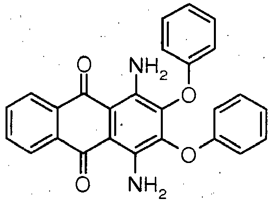
16. A und A' = NRR' mit R = H, R' = 4-Methylphenyl sowie **B**, **B'**, **R¹**, **R², R³** und **R⁴** = H

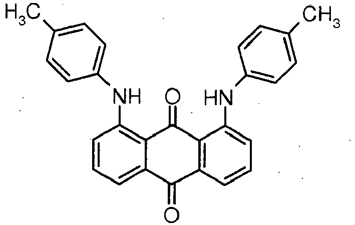

Ganz besonders bevorzugt sind Anthrachinon-Farbstoffe mit der allgemeinen chemischen Formel (I), in denen:
a. **A** = OH, **B** = NH₂ sowie **A'**, **B'**, **R¹, R², R³** und **R⁴** gleich H;
b. **A** und B = NH₂ sowie **A', B', R¹**, **R², R³** und **R⁴** gleich H;
c. **A** = NH₂ sowie B, **A',** B', **R¹, R², R³** und **R⁴** gleich H;

Geeignete Anthrachinon-Farbstoffe kann der Fachmann zum Beispiel dem Artikel "Bien, Stawitz, Wunderlich, Anthraquinone Dyes and Intermediates", aus Ullmann's Encyclopedia of Industrial Chemistry, Electronic Release 2009, Wiley-VCH entnehmen.

Um eine gute Einbringung des Farbstoffes in ein Sicherheits- oder Wertdokument zu ermöglichen, weist der Anthrachinon-Farbstoff vorteilhaft eine ausreichende Löslichkeit in einem zur Einbringung eingesetzten Lösemittel auf, sofern die Aufbringung des Farbstoffes auf ein Substrat mittels einer Tinte oder Druckfarbe erfolgt. Erfolgt die Aufbringung in fester Form, zum Beispiel als Toner eines Laserdruckers, so ist eine Löslichkeit nicht notwendig.

Die Einbringung des Farbstoffes kann über Beschichten (Coating), Streichen, Rakeln, Sprühen oder Drucken erfolgen. Zu den Druckverfahren zählen Tief-, Hoch-, Flach- und Durchdruck in den Ausprägungen Stichtiefdruck, Rastertiefdruck, Letterset, Buchdruck, Offset (insbesondere wasserloser Offset), Siebdruck. Ferner sind alle einschlägigen Digitaldruckverfahren von Interesse. Dazu zählen Tintenstrahldruck, Elektrophotographie, Lasersublimationsdruck, Thermosublimationsdruck und andere Verfahren, um hier nur die Wichtigsten beispielhaft zu nennen.

Bevorzugte Lösemittel sind halogenfreie organische Losungsmittel. Besonders bevorzugt sind insbesondere Polyol-Ether, hochkondensierte Ester, Glykolester, aliphatische, cycloaliphatische, aromatische Kohlenwasserstoffe, wie Mesitylen (1,3,5-Trimethylbenzol), 1,2,4-Trimethylbenzol, Cumol (2-Phenylpropan), Solvent Naptha, Toluol und Xylol, (organische) Ester, wie Methylacetat, Ethylacetat, Butylacetat, Methoxypropylacetat, Ethyl-3-ethoxypropionat, Butylglycolacetat, Methyldiethylenglycolacetat. Bevorzugt sind Mesitylen, 1,2,4-Trimethylbenzol, Cumol und Solvent Naptha, Toluol, Xylol, Essigsäuremethylester, Essigsäureethylester, Methoxypropylacetat, Ethyl-3-ethoxypropionat, Butylglycolacetat, Methyldiethylenglycolacetat. Ganz besonders bevorzugt sind Mesitylen, 1,2,4-Trimethylbenzol, Cumol, Solvent Naptha und Ethyl-3-ethoxypropionat, Butylglycolacetat, Methyldiethylenglycolacetat.

Besonders bevorzugter Weise weist der Anthrachinon-Farbstoff eine gute Löslichkeit in einem Lösemittelgemisch auf. Ein typisches Lösemittelgemisch umfasst beispielsweise L1) 0 bis 10 Gew.-%, vorzugsweise 1 bis 5 Gew.-%, insbesondere 2 bis 3 Gew.-%, Mesitylen, L2) 10 bis 50 Gew.-%, vorzugsweise 25 bis 50 Gew.-%, insbesondere 30 bis 40 Gew.-%, 1-Methoxy-2-propanolacetat, L3) 0 bis 20 Gew.-%, vorzugsweise 1 bis 20 Gew.-%, insbesondere 7 bis 15 Gew.-%, 1,2,4-Trimethylbenzol, L4) 10 bis 50 Gew.-%, vorzugsweise 25 bis 50 Gew.-%, insbesondere 30 bis 40 Gew.-%, Ethyl-3-ethoxypropionat , L5) 0 bis 10 Gew.-%, vorzugsweise 0,01 bis 2 Gew.-%, insbesondere 0,05 bis 0,5 Gew.-%, Cumol, und L6) 0 bis 80 Gew.-%, vorzugsweise 1 bis 40 Gew.-%, insbesondere 15 bis 25 Gew.-%, Solvent Naphtha, wobei die Summe der Komponenten L1 bis L6 stets 100 Gew.-% ergibt.

Eine Farbe, insbesondere eine Tinte, können neben dem erfindungsgemäßen Farbstoff und dem Lösemittel bzw. Lösemittelgemisch optional noch zusätzliche Bestandteile enthalten, insbesondere Bindemittel, Füllstoffe, Farbmittel oder Farbmittelgemische, funktionelle Materialien oder eine Mischung solcher Materialien, Additive und/oder Hilfsstoffe oder eine Mischung solcher Stoffe. Als Farbmittel sind alle farbgebenden Stoffe bezeichnet. Funktionelle Materialien umfassen Lumineszenzstoffe, zum Beispiel Elektroluminophore, Antistokes Luminophore, magnetisierbare Materialien sowie Raman-aktive oder Ramanverstärkende Materialien. Diese dienen als weitere Sicherheitsmerkmale. Additive und/oder Hilfsstoffe umfassen Antischaummittel, Stellmittel, Netzmittel, Tenside, Fließmittel, Trockner, Katalysatoren, Stabilisatoren, Biozide, Polymere zur Viskositätseinstellung und Puffersysteme.

Die Anregung erfolgt in einer Ausführungsform im VIS-Spektralbereich. Unter dem VIS-Spektralbereich wird der Bereich zwischen 400 und 650 nm verstanden.

In einer alternativen Ausführungsform erfolgt die Anregung durch Anregung im UV-Spektralbereich zwischen 200 und 400 nm. Besonders bevorzugt ist eine Anregung im UV-A Bereich (400 bis 320 nm), insbesondere mit 365 nm, und/oder im UV-B Bereich (320 bis 280 nm), insbesondere 312 nm.

In einer weiteren alternativen Ausführungsform der Erfindung erfolgt die Anregung kombiniert im UV- und VIS-Spektralbereich. Dieses ist bevorzugt, wenn das Sicherheitsmerkmal verschiedene Markierungsstoffe enthält, welche eine Lumineszenz im NIR aufweisen.

In einer weiteren bevorzugten Ausführungsform der Erfindung weist mindestens ein Anthrachinon-Farbstoff im VIS-Spektralbereich keine Absorption auf. Hierunter wird verstanden, dass die maximale Absorption des Farbstoffes im Bereich von 400 bis 650 nm nicht größer ist als 10 % der maximalen Absorption des Farbstoffes im Bereich von 250 bis 1600 nm. Besonders bevorzugt ist die maximale Absorption im Bereich von 400 bis 650 nm nicht größer als 2 % der maximalen Absorption im Bereich von 250 bis 1600 nm.

In einer weiteren bevorzugten Ausführungsform der Erfindung weist das Sicherheitsmerkmal zusätzlich zu dem mindestens einen Anthrachinon-Farbstoff mindestens einen zweiten Markierungsstoff auf. Der zweite Markierungsstoff weist eine Absorption im VIS-Spektralbereich auf. Dieses ist vorteilhaft, da auf diese Weise Farbeindrücke erzeugt werden können, welche durch chemisch reine Farbstoffe aufgrund des begrenzten verfügbaren Farbraumes der denkbaren Verbindungen nicht zugänglich wären.

In einer weiteren bevorzugten Ausführungsform der Erfindung handelt es sich bei dem Sicherheits- oder Wertdokument um einen Mehrschichtaufbau. Ein Mehrschichtaufbau ist ein mittels Lamination oder Kleben hergestellter Körper, zum Beispiel ein Kartenkörper. Dieser wird durch Zusammentragen einzelner Schichten, z.B. Folien und Lamination und/oder Kleben zu einem Körper verbunden. Hierbei können die Folien aus gleichen oder verschiedenen Materialien bestehen, insbesondere aus Polycarbonat (PC), insbesondere Bisphenol-A-Polycarbonat, Polyethylenterephthalat (PET), deren Derivaten wie Glykol-modifiziertem PET (PETG), Polyethylennaphthalat (PEN), Polyvinylchlorid (PVC), Polyvinylbutyral (PVB), Polymethylmethacrylat (PMMA), Polyimid (PI), Polyvinylalkohol (PVA), Polystyrol (PS), Polyvinylphenol (PVP), Polypropylen (PP), Polyethylen (PE), thermoplastischen Elastomeren (TPE), insbesondere thermoplastischem Polyurethan (TPU), Acrylnitril-Butadien-Styrol (ABS), Papier, Teslin^{®} sowie deren Derivaten, koextrudierten Folien, welche unter anderen diese Materialien enthalten, sowie Hybridmaterialien, welche unter anderen die oben genannten Materialien enthalten. Besonders bevorzugt sind Sicherheits- oder Wertdokumente, welche zumindest teilweise aus Polycarbonat bestehen.

Eine Vorrichtung zum Verifizieren eines Sicherheits- oder Wertdokuments über mindestens ein Sicherheitsmerkmal weist eine Halteeinrichtung zur Platzierung des Sicherheits- oder Wertdokuments in der Verifikationsvorrichtung, eine Anregungsquelle zur Anregung des mindestens einen Markierungsstoffs und einen Detektor zur Registrierung der Lumineszenz des mindestens einen Markierungsstoffes im NIR-Spektralbereich auf.

Als Anregungsquellen können insbesondere LEDs, Dioden-Laser, Quecksilber-Dampflampen oder Halogenlampen eingesetzt werden. Bevorzugt sind Halogenlampen, Quecksilber-Niederdrucklampen und LEDs geeigneter Wellenlänge.

Als Detektoren können Silizum- oder InGaAs-Photodioden oder Array-Detektoren eingesetzt werden. Diese können mittels Filtern oder mittels dispersiver Elemente, insbesondere Gitter, zur selektiven Empfindlichkeit im NIR geeignet sein. Besonders bevorzugt werden mit wechselbaren Filtern versehene CCD- oder CMOS-Kameras als Detektoren eingesetzt, da diese zusätzlich geometrische Informationen erfassen können.

Ausführungsbeispiele der Erfindung werden nun unter Bezugnahme auf die beigefügten Figuren beschrieben. Die einzelnen Figuren zeigen:
- Fig. 1:: Emissionsspektrum eines ersten Anthrachinon-Farbstoffes;
- Fig. 2:: Anregungsspektrum eines ersten Anthrachinon-Farbstoffes:
- Fig. 3:: Emissionsspektrum eines zweiten Anthrachinon-Farbstoffes;
- Fig. 4:: Anregungsspektrum eines zweiten Anthrachinon-Farbstoffes:
- Fig. 5:: Vorrichtung zur Verifikation eines Sicherheits- oder Wertdokuments mit einem Sicherheitsmerkmal mit einem Anthrachinon-Farbstoff;
- Fig. 6:: Aufnahme eines Passfotos (a) im VIS-Bereich bzw. (b) im NIR-Bereich unter VIS-Anregung, rechts mit einem erfindungsgemäßen Anthrachinon-Farbstoff gedruckt, links mit einem Referenz-Farbstoff (Phthalocyanin-Farbstoff);

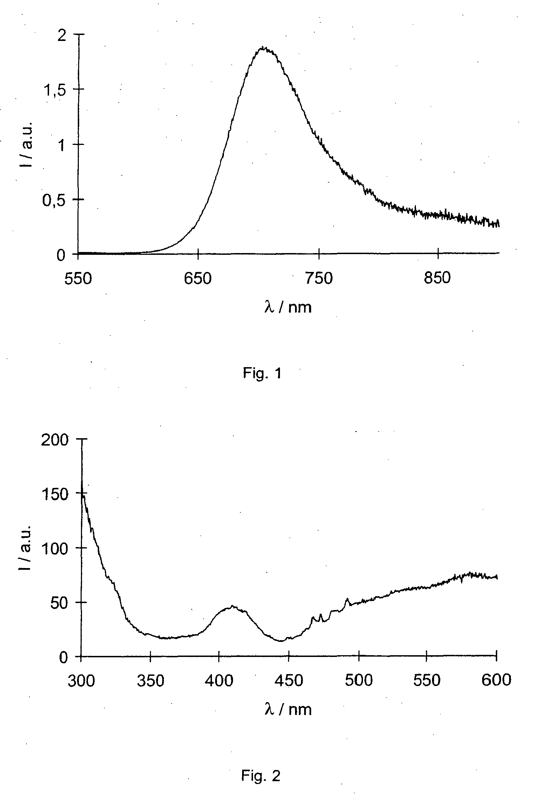

In Fig. 1 und Fig. 2 sind Spektren eines einlaminierten Rakelandrucks gezeigt. Der Andruck enthielt das Anthrachinon-Farbmittel 1,8-bis-p-Methylphenylaminoanthrachinon (Verbindung 16). Der Andruck auf PC wurde mit weiteren PC-Folien zu einem monolithischen Kartenkörper laminiert, sodass sich der Andruck im Karteninneren befand. Auf der Abszisse ist jeweils die Wellenlänge λ in nm, und auf der Ordinate ist die Intensität I in willkürlichen Einheiten a.u. aufgetragen. Die Messungen wurden durchgeführt an einem Fluorolog-3 Spektrometer.

In Fig. 1 ist ein Emissionsspektrum gezeigt. Die Anregung erfolgte bei 460 nm und somit im VIS-Bereich. Die Emission wurde wellenlängenselektiv detektiert. Gut erkennbar ist das Emissionsmaximum bei 703 nm und somit im NIR-Bereich.

In Fig. 2 ist das Anregungsspektrum des in Fig. 1 gezeigten Anthrachinon-Farbmittels dargestellt, dass heißt, bei vorgegebener Emissionswellenlänge wurde die Anregungswellenlänge verändert. Zur Detektion der NIR-Lumineszenz wurde bei 703 nm detektiert, dem aus der Emissionsmessung gemäß Fig. 1 ermittelten Maximum. Gut erkennbar sind die breiten Absorptionsbanden im VIS-Bereich, welche für den blauen Farbeindruck des Anthrachinon-Farbmittels verantwortlich sind.

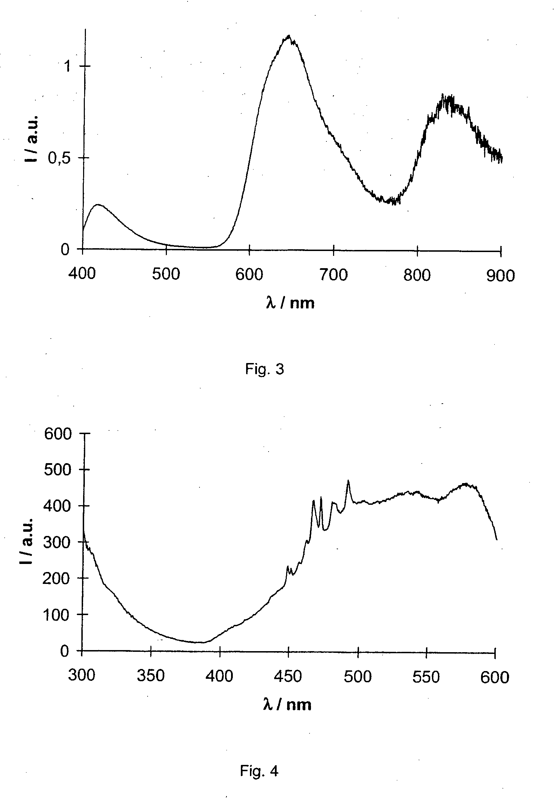

In Fig. 3 und Fig. 4 sind Spektren eines einlaminierten Rakelandrucks gezeigt. Der Andruck enthielt das Anthrachinon-Farbmittel 1,4-Diamino-2,3-diphenoxyanthrachinon (Verbindung 15). Der Andruck auf PC wurde mit weiteren PC-Folien zu einem monolithischen Kartenkörper laminiert, sodass sich der Andruck im Karteninneren befand. Auf der Abszisse ist jeweils die Wellenlänge λ in nm, und auf der Ordinate ist die Intensität I in willkürlichen Einheiten a.u. aufgetragen. Die Messungen wurden durchgeführt an einem Fluorolog-3 Spektrometer.

In Fig. 3 ist ein Emissionsspektrum gezeigt. Die Anregung erfolgte bei 360 nm und somit im UV-A-Bereich. Die Emission wurde wellenlängenselektiv detektiert. Gut erkennbar sind das Emissionsmaximum bei 643,5 nm und eine zweite Emissionsbande bei etwa 800 nm im NIR-Bereich. Ein wesentlicher Anteil der Emission befindet sich im Bereich ab 650 nm und größer.

In Fig. 4 ist das Anregungsspektrum des in Fig. 3 gezeigten Anthrachinon-Farbmittels dargestellt, dass heißt, bei vorgegebener Emissionswellenlänge wurde die Anregungswellenlänge verändert. Zur Detektion der NIR-Lumineszenz wurde bei 643 nm detektiert, dem aus der Emissionsmessung gemäß Fig. 3 ermittelten Maximum. Gut erkennbar sind die breiten Absorptionsbanden im VIS-Bereich, welche für den rotvioletten Farbeindruck des Anthrachinon-Farbstoffs verantwortlich sind.

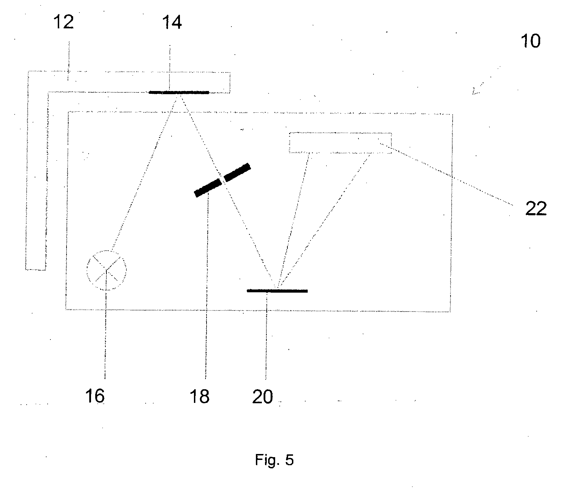

In Fig. 5 ist eine Vorrichtung 10 zur Verifikation eines Sicherheits- oder Wertdokuments 12 schematisch dargestellt. Gezeigt ist die Verifikation eines Dokuments 12 in Form eines aufgeschlagenen Passbuches mit einem Sicherheitsmerkmal 14, welches einen Anthrachinon-Farbstoff beinhaltet. Die Vorrichtung 10 weist eine Lichtquelle 16 auf. Die Lichtquelle ist als Halogenlampe, Quecksilber-Niederdrucklampe, LED geeigneter Wellenlänge oder eine Kombination dieser Lichtquellen ausgebildet. Das von der Lichtquelle 16 emittierte Licht trifft auf den Andruckbereich des Sicherheitsmerkmals 14 und regt dort den Anthrachinon-Farbstoff zur Lumineszenz an. Das vom Anthrachinon-Farbstoff emittierte Licht wird durch einen Spalt 18 vom Streulicht getrennt, und mit Hilfe eines Gitters 20 spektral aufgelöst auf einen Detektor 22 in Form einer CCD-Zeile geleitet. Zur Auswertung werden ausschließlich die spektralen Anteile der Lumineszenz verwendet, die sich oberhalb von 650 nm befinden. Anstelle eines Gitters kann auch ein Langpassfilter verwendet werden, der lediglich für Lumineszenzlicht oberhalb von 650 nm transparent ist. Die Vorrichtung 10 kann ferner derart ausgebildet sein, dass diese parallel oder zeitlich versetzt weitere Sicherheitsmerkmale des Sicherheits- oder Wertdokuments 12 prüfen und/oder die Daten erfassen kann.

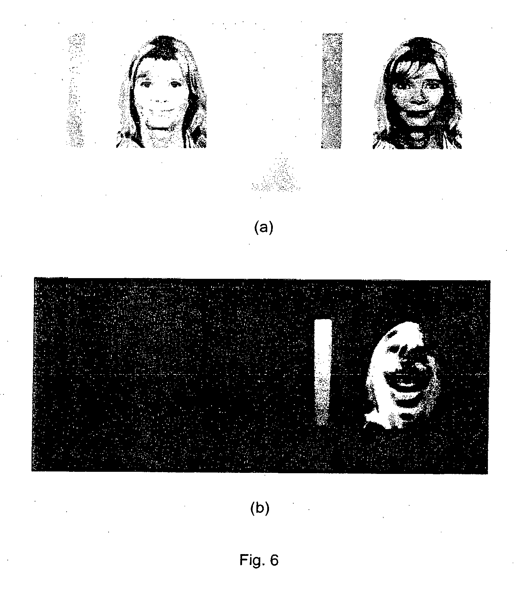

In Fig. 6 sind Aufnahmen von Passfotos auf PC dargestellt. Die Passfotos wurden mittels Inkjet-Drucks einer Farbe, welche im Falle des rechts dargestellten Fotos einen Anthrachinon-Farbstoff, und im Falle des links dargestellten Fotos einen Referenz-Farbstoff (Phthalocyanin-Farbstoff) mit im Wesentlichen gleicher Konzentration enthielt. Der Druck erfolgte mit einem Inkjet-Drucker auf einer z.B. 80 - 120 µm dicken PC-Folie. Anschließend wurde die bedruckte Folie mit weiteren Folien zu einem 800 µm Folienverbund zusammengetragen und zu einem monolithischen Körper laminiert, sodass sich der Andruck letztlich innerhalb des Kartenkörpers befand.

In der Fig. 6 (a) sind zwei Aufnahmen von identischen Passfotos dargestellt. Die Aufnahmen wurden unter Anregung mit Weißlicht mit einer im sichtbaren Spektralbereich empfindlichen Kamera aufgenommen. Im Sichtbaren ist nur ein geringer Unterschied zwischen dem rechten, mit dem erfindungsgemäßen Anthrachinon-Farbstoff hergestellten Passfoto und dem linken, mit dem Referenz-Farbstoff hergestellten Passfoto zu sehen. In Fig. 6 (b) sind die gleichen Passfotos unter Detektion im NIR mittels einer CCD-Kamera mit einem 650 nm Langpassfilter gezeigt. Der Unterschied ist deutlich erkennbar. Im rechten, mit dem erfindungsgemäßen Anthrachinon-Farbstoff hergestellten Passfoto konnte die NIR-Lumineszenz unter VIS-Anregung sehr gut detektiert werden. Das linke, mit dem Referenz-Farbstoff hergestellte Passbild war praktisch nicht detektierbar. Somit war zwar eine Nachstellung des Passbildes mit dem Referenz-Farbstoff für eine einfache Sichtkontrolle möglich, nicht jedoch für eine Kontrolle unter NIR-Lumineszenzbedingungen.

## Patentansprüche

1. Verfahren zum Verifizieren eines Sicherheits- oder Wertdokuments (12) über mindestens ein Sicherheitsmerkmal (14), umfassend die folgenden Verfahrensschritte:
a. Bereitstellen des Sicherheits- oder Wertdokuments (12), wobei das mindestens eine Sicherheitsmerkmal (14) durch jeweils mindestens einen im NIR-Spektralbereich lumineszierenden Markierungsstoff gebildet ist,
b. Anregen des mindestens einen Markierungsstoffes und
c. Registrieren einer Lumineszenz des mindestens einen Markierungsstoffes im NIR-Spektralbereich,
**dadurch gekennzeichnet, dass** der mindestens eine Markierungsstoff aus der Klasse der Anthrachinon-Farbstoffe ausgewählt ist.

2. Verfahren zum Verifizieren nach Anspruch 1, **dadurch gekennzeichnet, dass** der mindestens eine Anthrachinon-Farbstoff ausgewählt ist aus der Gruppe, umfassend 1-Monoamino-, 1,4-Diamino- und 1-Amino-4-hydroxyanthrachinon-Farbstoffen.

3. Verfahren zum Verifizieren nach einem der vorstehenden Ansprüche, **dadurch gekennzeichnet, dass** der mindestens eine Anthrachinon-Farbstoff im VIS-Spektralbereich eine Absorption aufweist.

4. Verfahren zum Verifizieren nach einem der Ansprüche 1 und 2, **dadurch gekennzeichnet, dass** der mindestens eine Anthrachinon-Farbstoff im VIS-Spektralbereich keine Absorption aufweist.

5. Verfahren zum Verifizieren nach einem der vorstehenden Ansprüche, **dadurch gekennzeichnet, dass** zusätzlich zu dem mindestens einen Anthrachinon-Farbstoff mindestens ein zweiter Markierungsstoff in dem Sicherheitsmerkmal (14) enthalten ist, der im VIS-Spektralbereich eine Absorption aufweist.

6. Verfahren zum Verifizieren nach einem der vorstehenden Ansprüche, **dadurch gekennzeichnet, dass** das Sicherheits- oder Wertdokument (12) zumindest teilweise aus Polycarbonat besteht.

7. Verfahren zum Verifizieren nach einem der vorstehenden Ansprüche, **dadurch gekennzeichnet, dass** der mindestens eine Markierungsstoff ausgewählt ist aus der Gruppe, umfassend die Verbindung mit der chemischen Formel 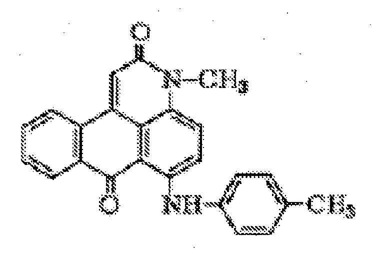 und Verbindungen mit der allgemeinen chemischen Formel (1) 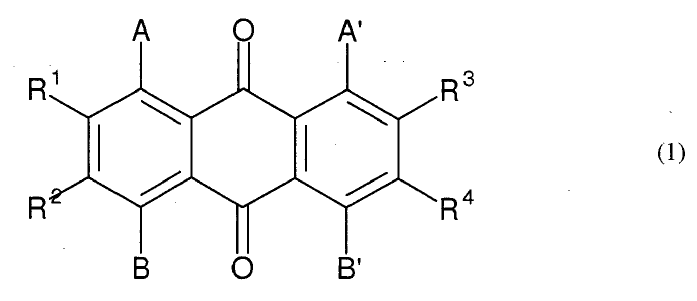 wobei A, A', B und B' unabhängig voneinander ausgewählt sind aus der Gruppe, umfassend H, OR, NRR' und NO₂, und wobei R¹, R², R³ und R⁴ unabhängig voneinander ausgewählt sind aus der Gruppe, umfassend H, OR und SR, wobei R und R' unabhängig voneinander ausgewählt sind aus der Gruppe, umfassend H, C₁-C₁₅-Alkyl, unsubstituiertes oder substituiertes Aryl, (CH₂)ₙ-OR" mit n = 1 - 8 und R" = H, C₁-C₁₅-Alkyl, sowie (CH₂CH₂O)ₙ-R" mit n = 1 - 8 und R" = H, C₁-C₁₅-Alkyl.

## Claims

1. A method for verifying a security document or document of value (12) by means of at least one security feature (14), comprising the steps of:
a. providing the security document or document of value (12), with the at least one security feature (14) being formed by at least one tracer luminescent in the NIR spectral range,
b. excitation of the at least one tracer and
c. registering a luminescence of the at least one tracer in the NIR spectral range, the at least one tracer being selected from the class of anthraquinone dyes.

2. The method of verification of claim 1 wherein the at least one anthraquinone dye is selected from the group comprising 1 -monoamino-, 1,4-diamino- and 1-amino-4-hydroxyanthraquinone dyes.

3. The method of verification of any one of the preceding claims wherein the at least one anthraquinone dye exhibits an absorption in the VIS spectral range.

4. The method of verification of claims 1 or 2 wherein the at least one anthraquinone dye exhibits no absorption in the VIS spectral range.

5. The method of verification of any one of the preceding claims wherein as well as the at least one anthraquinone dye, the security feature (14) contains at least a second tracer which exhibits an absorption in the VIS spectral range.

6. The method of verification of any one of the preceding claims wherein the security document or document of value (12) at least partly consists of polycarbonate.

7. The method of verification of any one of the preceding claims wherein the at least one tracer is selected from the group comprising the compound which has the chemical formula 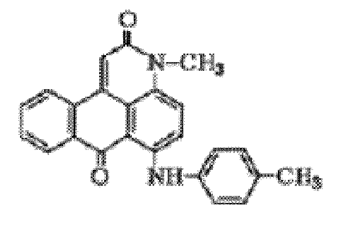 and compounds with the general chemical formula (1) 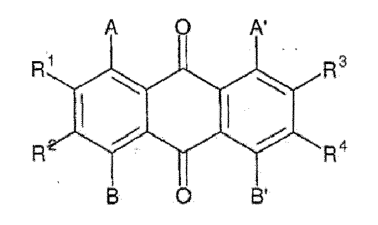 where A, A', B and B' are selected independently of one another from the group comprising H, OR, NRR' and NO₂, and where R¹, R², R³ and R⁴ are selected independently of one another from the group comprising H, OR and SR, where R and R' are selected independently of one another from the group comprising H, C₁-C₁₅-alkyl, unsubstituted or substituted aryl, (CH₂)ₙ-OR" where n = 1 - 8 and R" = H, C₁-C₁₅-alkyl, and (CH₂CH₂O)ₙ-R" where n = 1 - 8 and R" = H, C₁-C₁₅-alkyl.

## Revendications

1. Procédé de vérification d'un document de sécurité ou de valeur (12) par l'intermédiaire d'au moins une caractéristique de sécurité (14), comprenant les étapes de procédé qui suivent consistant à :
a. fournir le document de sécurité ou de valeur (12), sachant que la caractéristique de sécurité (14) au moins au nombre de une est formée par respectivement au moins un matériau de marquage luminescent dans le domaine spectral NIR ;
b. stimuler le matériau de marquage au moins au nombre de un ; et
c. enregistrer une luminescence du matériau de marquage au moins au nombre de un dans le domaine spectral NIR,
**caractérisé en ce que** le matériau de marquage au moins au nombre de un est choisi parmi la catégorie des colorants à l'anthraquinone.

2. Procédé de vérification selon la revendication 1, **caractérisé en ce que** le colorant à l'anthraquinone au moins au nombre de un est choisi parmi le groupe comprenant des colorants au 1-monoamino-anthraquinone, au 1,4-diamino-anthraquinone et au 1-amino-4-hydroxyanthraquinone.

3. Procédé de vérification selon l'une quelconque des revendications précédentes, **caractérisé en ce que** le colorant à l'anthraquinone au moins au nombre de un présente une absorption dans le domaine spectral VIS.

4. Procédé de vérification selon l'une quelconque des revendications 1 et 2, **caractérisé en ce que** le colorant à l'anthraquinone au moins au nombre de un ne présente aucune absorption dans le domaine spectral VIS.

5. Procédé de vérification selon l'une quelconque des revendications précédentes, **caractérisé en ce que** la caractéristique de sécurité (14) contient, en plus du colorant à l'anthraquinone au moins au nombre de un, au moins un deuxième colorant, qui présente une absorption dans le domaine spectral VIS.

6. Procédé de vérification selon l'une quelconque des revendications précédentes, **caractérisé en ce que** le document de sécurité ou de valeur (12) est constitué au moins en partie d'un polycarbonate.

7. Procédé de vérification selon l'une quelconque des revendications précédentes, **caractérisé en ce que** le colorant au moins au nombre de un est choisi parmi le groupe comprenant le composé ayant la formule chimique qui suit 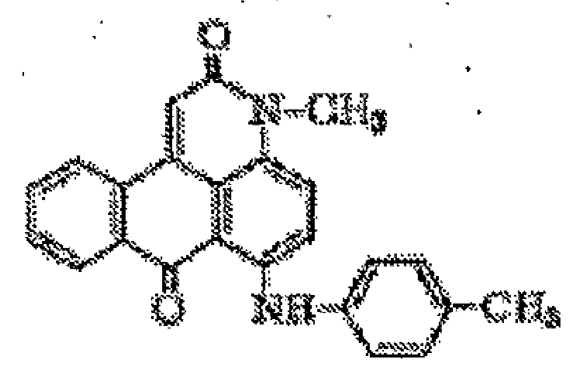 et les composés de la formule chimique générale (1) suivante 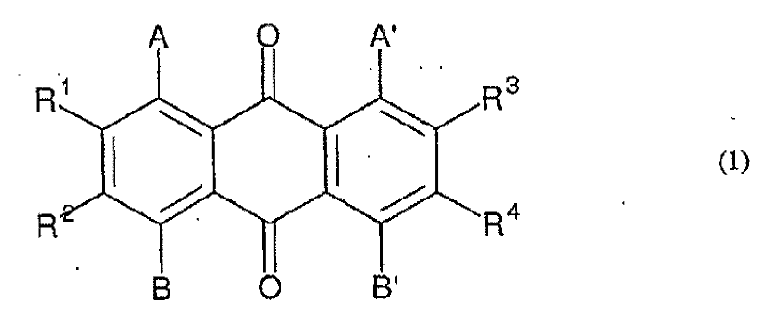 sachant que A, A', B et B' sont choisis indépendamment les uns des autres parmi le groupe comprenant H, OR, NRR' et NO₂, et sachant que R¹, R², R³ et R⁴ sont choisis indépendamment les uns des autres parmi le groupe comprenant H, OR et SR, sachant que R et R' sont choisis indépendamment l'un de l'autre parmi le groupe comprenant H, alkyle en C₁-C₁₅, aryle non substitué ou substitué, (CH₂)ₙ-OR" où n = 1 - 8 et R" = H, alkyle en C₁-C₁₅, ainsi que (CH₂CH₂O)ₙ-R" où n = 1 - 8 et R" = H, alkyle en C₁-C₁₅.
